Europäisches Patentamt

European Patent Office

Office européen des brevets

(11) Veröffentlichungsnummer: **0 407 769 A1**

# (12) EUROPÄISCHE PATENTANMELDUNG

(21) Anmeldenummer: **90111605.3**

(22) Anmeldetag: **20.06.90**

(51) Int. Cl.⁵: **F16D 65/12**

(30) Priorität: **11.07.89 DE 3922768**

(43) Veröffentlichungstag der Anmeldung:
**16.01.91 Patentblatt 91/03**

(84) Benannte Vertragsstaaten:
**CH DE FR IT LI**

(71) Anmelder: **Maschinenfabrik Stromag GmbH**
**Hansastrasse 120**
**D-4750 Unna(DE)**

(72) Erfinder: **Bangert, Gustav, Ing.grad.**
**Steinstrasse 18**
**D-4755 Holzwickede(DE)**
Erfinder: **Jordan, Michael, Dipl.-Ing.(FH)**
**Nordring 120**
**D-4355 Waltrop(DE)**

(74) Vertreter: **Wilhelm & Dauster Patentanwälte**
**European Patent Attorneyseys**
**Hospitalstrasse 8**
**D-7000 Stuttgart 1(DE)**

(54) Ankerteil für eine elektromagnetische Kupplungs/Brems-Kombination.

(57) Es wird vorgesehen, die beiden Ankerscheiben (1,2) der Kupplungs/Brems-Kombination als Teil einer einstückigen Doppelankerscheibe auszubilden, bei der die Ankerscheibe durch Bindungsstege (4) fest miteinander verbunden, aber durch einen radialen Spalt (3) von einander getrennt sind. Die federnden Stege zur Verbindung mit Primär- oder Sekundärteil der Kupplung sind an Armen (6) angebracht, die radial von mindestens einer dieser Ankerscheiben aus nach innen ragen und so bemessen sind, daß der ihnen zugewandte Teil des radialen Spaltes als Eintrittsöffnung für radial nach außen strömende Kühlluft dient.

Verwendung für Steuereinrichtungen von Webmaschinen.

Fig. 2

## ANKERTEIL FÜR EINE ELEKTROMAGNETISCHE KUPPLUNGS/BREMS-KOMBINATION

Die Erfindung betrifft ein Ankerteil für eine elektromagnetische Kupplungs/Bremsen-Kombination, bei der zwei axial auf Abstand gehaltene und je einem Elektromagneten zugeordnete Ankerscheiben mit im wesentlichen gleichen Innen- und Außendurchmesser über federnde Stege, insbesondere in der Form einer Membran, mit dem Primär- oder Sekundärteil der Kupplung verbunden sind.

Ein solches Ankerteil bekannter Kupplungs/Brems-Kombinationen (Stromag MFP 60) besteht aus Ankerscheiben, an denen eine Membran mit einer Mitnehmernabe angenietet ist. Kupplungs/Brems-Kombinationen dieser Art werden unter anderem auch bei Webmaschinen eingesetzt. Dort bildet die Nietverbindung wegen der immer mehr erwünschten höheren Schußzahlen eine Schwachstelle, weil sie durch das mit immer größerer Frequenz auftretende Wechseldrehmoment am stärksten belastet wird. Die Lebensdauer, aber auch die Funktionssicherheit solcher Kupplungen ist daher bei immer häufiger werdenden Umschaltungen von Kupplung auf Bremse nicht immer ausreichend.

Der Erfindung liegt die Aufgabe zugrunde, das Ankerteil einer elektromagnetischen Kupplungs/Bremsen-Kombination so auszubilden, daß die Befestigung zwischen Membran und Ankerscheiben im Hinblick auf Wechseldrehmomente unkritisch wird, ohne daß die Masse der beiden Ankerscheiben im Hinblick auf möglichst geringes Massenträgheitsmoment zu groß wird. Zur Lösung dieser Aufgabe wird vorgesehen, daß die beiden Ankerscheiben Teil einer einstückigen Doppelankerscheibe sind, bei der die Ankerscheiben durch gleichmäßig auf dem Umfang verteilte Verbindungsstege fest miteinander verbunden, aber durch einen die Verbindungsstege einfassenden radialen Spalt voneinander getrennt sind, wobei die federnden Stege an Befestigungsarmen angebracht sind, die radial von mindestens einer der Ankerscheiben aus nach innen ragen und so bemessen sind, daß der ihnen zugewandte Teil des radialen Spaltes als Eintrittsöffnung für während des Betriebes radial nach außen strömende Kühlluft dient.

Diese Ausgestaltung vermeidet Befestigungsstellen der Membran unmittelbar an den Ankerscheiben. Die Ankerscheiben selbst können sehr schmal und massearm ausgebildet werden und werden durch relativ schmale Verbindungsstege fest aneinander gehalten. Die Befestigungsarme für eine Membran brauchen nur an einer der beiden Ankerscheiben vorgesehen zu werden. Sie können so weit nach innen gezogen werden, daß dort eine stabile Schraubbefestigung möglich wird, die aus-·reicht, um die auftretenden häufigen Wechseldrehmomente aufnehmen zu können. Gleichzeitig mit dieser Ausgestaltung wirkt die Doppelankerscheibe aber auch als eine Art Ventilator und erlaubt daher in ausgezeichneter Weise, die bei höheren Schaltzahlen auftretende höhere Wärmebelastung auch einwandfrei abzuführen.

Vorteilhafte Weiterbildungen sind in den Unteransprüchen gekennzeichnet. So bieten die Merkmale der Unteransprüche 2 bis 5 Vorteile hinsichtlich des Aufbaues und der Gestaltung der Kupplungs/Brems-Kombination. Die Merkmale der Ansprüche 6 bis 8 ergeben eine äußerst leichte Bauweise, die dennoch stabil genug ist und die Merkmale des Anspruches 9 schließlich gewährleisten einen stabilen Aufbau.

Die Erfindung ist in der Zeichnung anhand eines Ausführungsbeispieles dargestellt und wird im folgenden beschrieben. Es zeigen:

Fig. 1 die schematische Ansicht des Ankerteiles einer erfindungsgemäßen elektromagnetischen Kupplungs/Brems-Kombination ohne die übrigen Kupplungsbestandteile,

Fig. 2 den Schnitt durch das Ankerteil der Fig. 1 längs der Linie II-II in Fig. 1 und

Fig. 3 den Teilschnitt durch das Ankerteil der Fig. 1 längs der Linie III-III.

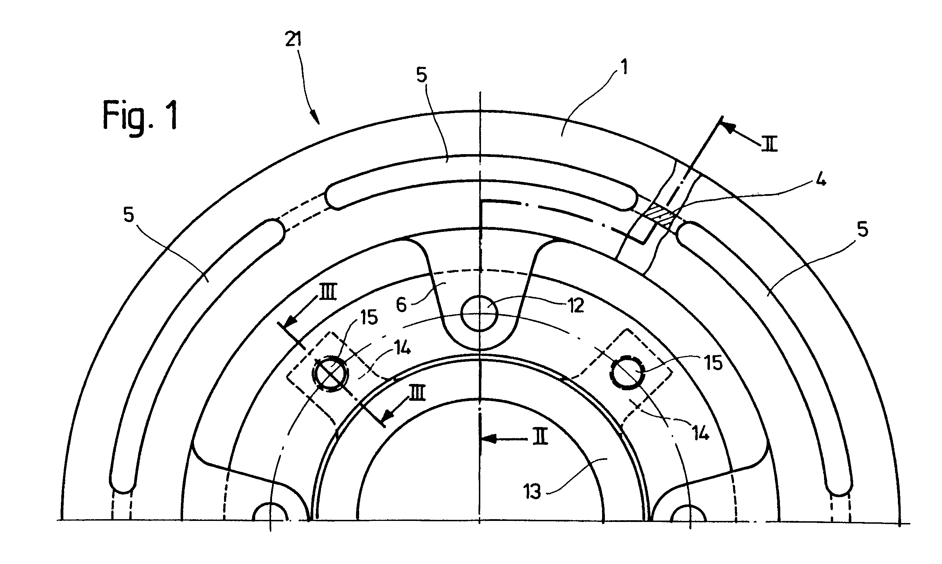

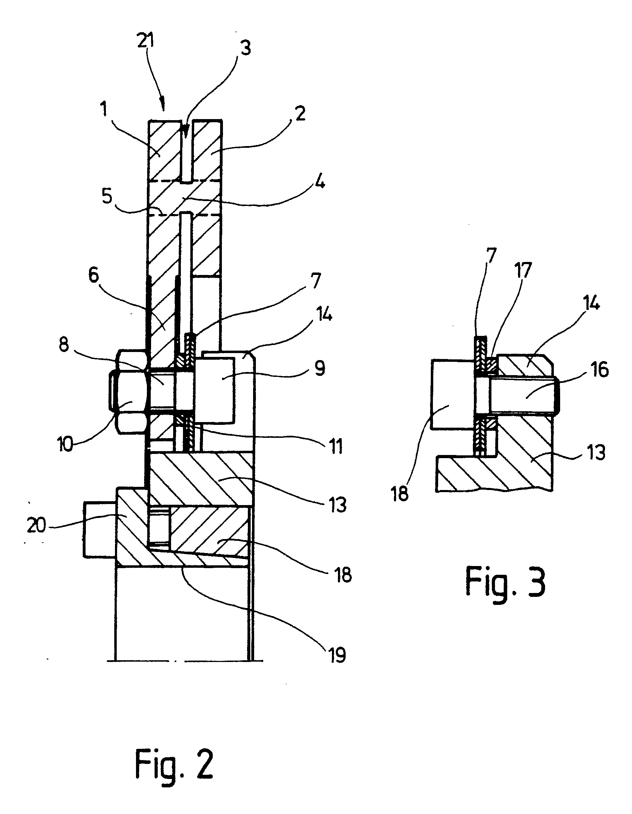

In den Fig. 1 bis 3 ist das Ankerteil einer elektromagnetischen Kupplungs/Brems-Kombination gezeigt, die in bekannter Weise aus einem angetriebenen Primär- und einem abgetriebenen Sekundärteil aufgebaut ist. Beispielsweise könnte der linken Seite des in Fig. 2 dargestellten Ankerteiles eine vom Primärteil angetriebene Reibscheibe und der anderen Seite eine feststehende Bremsscheibe zugeordnet sein, wobei sowohl der vom Primärteil angetriebenen Reibscheibe als auch der feststehenden Bremsscheibe ein von außen steuerbarer Elektromagnet zugeordnet ist, der bei Strombeaufschlagung dafür sorgt, daß das Ankerteil nach der einen oder anderen Seite axial gezogen wird, so daß die mit dem Ankerteil verbundene abgetriebene Welle wechselweise angetrieben oder abgebremst werden kann.

Um dies zu erreichen, besteht das Ankerteil aus zwei einstückig miteinander verbundenen Ankerscheiben (1 und 2), die im Abstand eines radialen Spaltes (3) parallel zueinander angeordnet sind und den gleichen Außen- und Innendurchmesser besitzen. Die Ankerscheiben (1 und 2) sind einstückig durch Verbindungsstege (4) untereinander verbunden, die jeweils axial im Bereich des Spaltes (3) zwischen den Ankerscheiben (1 und 2) verlaufen und im Umfangsrichtung durch kreisbogenförmige Schlitze (5) begrenzt sind, die durch beide Ankerscheiben (1 und 2) axial hindurchgehen. Beim Ausführungsbeispiel überstreicht jeder der Schlitze (5) einen Winkel von etwa 48°. Auf dem gesamten Umfang sind sechs Schlitze (5) vorgesehen. Der Rest des Umfangswinkels wird durch die Verbindungsstege (4) eingenommen.

Von der Ankerscheibe (1) aus erstrecken sich vier gleichmäßig auf dem Umfang verteilte Befestigungsarme (6) nach innen, an denen, wie auch Fig. 2 zeigt, eine umlaufende Ringmembran (7), die aus zwei aneinanderliegenden Teilmembranen aufgebaut ist, angeschraubt ist. Dies geschieht mit Hilfe von Schrauben (8), deren Köpfe (9) an der Ringmembran (7) anliegen, die durch eine Scheibe (11) auf Abstand zu dem Befestigungsarm (6) gehalten wird. Eine Mutter (10) sorgt für die Befestigung zwischen Befestigungsarm (6) und Membran (7).

Wie Fig. 1 zeigt, sind jeweils um 45° versetzt zu den Anschlußbohrungen (12) radial von einer Mitnehmernabe (13) aus sich nach außen erstreckende Arme (14} angeordnet, deren Befestigungsbohrungen (15) auf dem gleichen Durchmesser liegen, wie die Bohrungen (12). Fig. 3 zeigt, daß diese Arme (14) ebenfalls mit Schrauben (16), die in ein Gewinde in den Armen (14) eingreifen, mit der zweiteiligen Ringmembran (7) verschraubt sind, wobei hier die Köpfe (18) der Schrauben (16) auf der von den Köpfen (9) der Schrauben (8) abgewandten Seite der Membran (7) anliegen und diese über zwischengefügte Scheiben (7) gegen die Arme (14) gedrückt wird. Die Mitnehmernabe (13) ist über einen keilförmigen Spannsatz (18) mit einem Befestigungsring (20) verbunden, dessen Bohrung (19) in nicht näher dargestellter Weise fest auf die abzutreibende Welle aufgesetzt ist.

Wie Fig. 1 zeigt, besteht auf diese Weise eine axial federnde, in Umfangsrichtung aber feste Verbindung zwischen der in Fig. 1 nicht gezeigten abgetriebenen Welle und der Doppelankerscheibe (21), welche aus den beiden Ankerscheibe (1 und 2) besteht.

Diese Doppelankerscheibe (21) kann daher axial nach der einen oder anderen Richtung gezogen werden. Sie ist durch die stabile Art der Befestigung nicht anfällig auf häufig wechselnde Drehmomente, die durch das Antreiben bzw. Abbremsen der abgetriebenen Welle erzeugt werden.

Wie Fig. 2 besonders deutlich zeigt, ist bei der erfindungsgemäßen Ausgestaltung vorgesehen, daß die Befestigungsarme (6), deren radiale Erstreckung etwa der radialen Erstreckung der beiden Ankerscheiben (1 und 2) entspricht, so weit nach innen gezogen sind, daß der Spalt (3) an der inneren Begrenzung der Ankerscheiben (1 und 2) eine radial nach innen offene Zuströmöffnung für Kühlluft bildet. Diese Kühlluft wird beim Betrieb durch den Spalt (3), durch die Schlitze (5) und jeweils zwischen den Stegen (4) radial nach außen bewegt. Die Doppelankerscheibe bildet daher ein innenbelüftetes Ankerteil, mit dem die während des Betriebes auftretende Wärme sehr gut abgefördert werden kann. Das neue Ankerteil eignet sich daher ganz besonders für hohe Schaltfrequenzen und hohe Frequenzen wechselnder Drehmomente.

## Ansprüche

1. Ankerteil für eine elektromagnetische Kupplungs/Bremsen-Kombination, bei der zwei axial auf Abstand gehaltene und je einem Elektromagneten zugeordnete Ankerscheiben (1, 2) mit im wesentlichen gleichen Innen- und Außendurchmesser über federnde Stege, insbesondere in der Form einer Membran (7) mit dem Primär- oder Sekundärteil der Kupplung verbunden sind, dadurch gekennzeichnet, daß die beiden Ankerscheiben (1, 2) Teil einer einstückigen Doppelankerscheibe (21) sind, bei der die Ankerscheiben durch gleichmäßig auf dem Umfang verteilte Verbindungsstege (4) fest miteinander verbunden, aber durch einen die Verbindungsstege (4) einfassenden radialen Spalt (3) voneinander getrennt sind und daß die federnden Stege (7) an Befestigungsarmen (6) angebracht sind, die radial von mindestens einer der Ankerscheiben (1) aus nach innen ragen und so bemessen sind, daß der ihnen zugewandte Teil des radialen Spaltes (3) als Eintrittsöffnung für während des Betriebes radial nach außen strömende Kühlluft dient.

2. Ankerteil nach Anspruch 1, dadurch gekennzeichnet, daß die Befestigungsarme (6) eine Länge aufweisen, die etwa der radialen Breite der Ankerscheiben (1, 2) entspricht.

3. Ankerteil nach einem der Ansprüche 1 oder 2, dadurch gekennzeichnet, daß vier gleichmäßig auf dem Umfang verteilte Befestigungsarme (6) und vier zwischen ihnen liegende radiale Arme (14) eines über eine Ringmembran (7) mit ihnen und dem Primär- oder Sekundärteil verbundenen Befestigungsringes (13) vorgesehen sind.

4. Ankerteil nach Anspruch 3, dadurch gekennzeichnet, daß die Ringmembran (7) mit den Befestigungsarmen verschraubt ist.

5. Ankerteil nach einem der Ansprüche 3 oder 4, dadurch gekennzeichnet, daß die Ringmembran (7) aus zwei parallelen Membranen gleicher Dicke aufgebaut ist.

6. Ankerteil nach Anspruch 1, dadurch gekennzeichnet, daß mindestens eine der Ankerscheiben (1, 2) mit etwa auf dem Durchmesser der Verbindungsstege (4) liegenden in Umfangsrichtung aber gegenüber den Verbindungsstegen (4) versetzten kreisbogenförmigen Schlitzen (5) durchsetzt ist.

7. Ankerteil nach Anspruch 6, dadurch gekennzeichnet, daß sechs Verbindungsstege (4) und dazwischenliegende bogenförmige Schlitze (5) gleichmäßig auf dem Umfang verteilt in der Doppelankerscheibe (21) vorgesehen sind.

8. Ankerteil nach Anspruch 7, dadurch gekennzeichnet, daß der von den Schlitzen (5) eingenommene Kreisbogenbereich sich mit dem von den Verbindungsstegen (4) überdeckten Kreisbogenbereich zu 360° ergänzt.

9. Ankerteil nach Anspruch 1, dadurch gekennzeichnet, daß die Doppelankerscheibe (21) mit den Befestigungsarmen (6) als ein einstückiges Schmiedeteil ausgebildet ist.

Fig. 1

EP 0 407 769 A1

Fig. 2

Fig. 3

# Europäisches Patentamt

## EUROPÄISCHER RECHERCHENBERICHT

Nummer der Anmeldung

**EP 90 11 1605**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 309 174 (LUCAS INDUSTRIES) <br> * Spalte 3, Zeilen 36-54; Spalte 4, Zeilen 45-48; Figuren 1-4 * | 1,3-5 | F 16 D 65/12 |
| A | | 2 | |
| A | DE-A-3 203 713 (BREMBO) <br> * Figur * | 6-8 | |

| | RECHERCHIERTE SACHGEBIETE (Int. Cl.5) |
|---|---|
| | F 16 D |

Der vorliegende Recherchenbericht wurde für alle Patentansprüche erstellt

| Recherchenort | Abschlußdatum der Recherche | Prüfer |
|---|---|---|
| Berlin | 15 Oktober 90 | LUDWIG H J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument